# EUROPEAN PATENT APPLICATION

(11) **EP 2 814 144 A1**
(43) Date of publication of application: **17.12.2014**
(21) Application number: 13171205.1
(22) Date of filing: 10.06.2013
(51) Int. Cl.: H02K 9/18, H02K 7/18

(54) **An air-to-air heat exchanger**

(71) Applicant: ABB Technology AG, 8050 Zürich (CH)
(72) Inventor: Halme, Matti, 00380 Helsinki (FI)
(74) Representative: Kolster Oy Ab

(57) **Abstract**

The heat exchanger comprises a first housing (10) provided with air channels (210) extending in a first direction (X) from an upstream end wall (13) towards a downstream end wall (14), a top plenum (20) in an upper portion of the first housing (10) above the air channels (210), and partition walls (220, 230) extending in a second direction (Y) perpendicular to the first direction (X) and dividing a lower portion of the first housing (10) into an upstream end section (31), a middle section (32), and a downstream end section (33). The air channels (210) terminate at the partition wall (230) between the middle section (32) and the downstream end section (33). The downstream end section (33) comprises at least one cone (300) extending in the first direction (X) and having a first upstream end (301) at the partition wall (230) where the air channels (210) terminate, and a second contracted downstream end (302).

## Description

### FIELD OF THE INVENTION

The present invention relates to an air-to-air heat exchanger according to the preamble of claim 1.

Air-to-air heat exchangers are used in many applications to cool an apparatus producing heat. E.g. electric machines are normally constructed under the assumption that the operating temperature of the electric machine remains under 40 degrees Celsius. Small electric machines can be cooled with a fan attached to the shaft of the electric machine and blowing external air that surrounds the electric machine through the electric machine. Bigger electric machines are normally provided with a heat exchanger for cooling the electric machine. The heat exchanger also makes it possible to close the inner air circulation within the machine. The heat exchanger could be a water-to-air heat exchanger or an air-to-air heat exchanger. A water-to-air heat exchanger is normally more efficient compared to an air-to-air heat exchanger, but there are many applications where water is to be avoided. An air-to-air heat exchanger is thus often the only option that can be used in a certain application.

The present invention is related to an air-to-air heat exchanger that can advantageously be used in connection with an electric machine. The electric machine is provided with an outer air circulation and an inner air circulation. The inner air circulation circulates air in a closed circulation from the electric machine to the heat exchanger and back to the electric machine. The outer air circulation circulates cooling air through the heat exchanger. The inner air circulates between the heat exchanger and the electric machine so that the inner air is cooled in the heat exchanger during each cycle.

### BACKGROUND ART

JP patent publication 10174369 discloses a heat exchanger for an electric machine. The heat exchanger comprises a housing and a set of pipes passing within the housing in the axial direction of the electric machine. A fan blows external cooling air through the pipes from an upstream end to a downstream end. The interior of the housing is divided into a first region A and a second region B with a traverse partition wall. Hot air from the electric machine situated below the housing flows first upwards across the pipes in the middle portion of the housing. The hot air is then directed downwards at the ends of the housing and returns back from both ends of the electric machine. The partition wall is positioned nearer to the upstream end of the pipes. The cooling area for the internal circulation air is thus smaller in the first region A compared to the cooling area in the second region B. The second region B will thus be more efficient than the first area A. This is to compensate for the fact that the external cooling air has a lower temperature in the first region A compared to the second region B. An evener cooling of the electric machine is thus achieved.

US patent 4,348,604 discloses a heat exchanger for an electric machine. The heat exchanger is a plate-type cross flow air-to-air heat exchanger. The heat exchanger comprises pairs of vertically extending plates. A first plate in the pair comprises horizontally extending partitions forming horizontal ducts for the external cooling air. A second plate in the pair comprises vertically extending partitions forming vertical ducts for the internal air. There is further a plenum above the vertically extending plates. The plenum is divided into two portions with a baffle plate extending laterally across the plenum. This baffle serves to divert and divide the air which passes upwards through the heat exchanger from the central portion of the machine in a progressive manner and to return the air in such proportional relationship downwards to the opposite ends of the machine that these ends receive air cooled to about equal temperature. An evener cooling of the electric machine is thus achieved.

There are also prior art air-to-air heat exchangers used for cooling electric machines comprising a first housing and a set of pipes passing within the first housing in a first direction. A fan blows external cooling air through the pipes from an upstream end to a downstream end of the pipes. The lower portion of the interior of the first housing is divided axially into three sections with traverse partition walls. A first end section is positioned at the upstream end of the housing, a second end section is positioned at the downstream end of the housing, and a middle section is positioned between the first end section and the second end section. An open top plenum is formed at the upper portion of the first housing above the partition walls. The electric machined to be cooled is situated in a second housing below the first housing so that the floor of the first housing sits on the ceiling of the second housing.

Hot internal air from the electric machine to be cooled flows upwards across the cooling pipes in the middle section of the first housing. The hot air is divided in the top plenum in the heat exchanger into two branches. A first branch flows downwards across the pipes in the first section and further into a first end of the electric machine. A second branch flows downwards across the pipes in the second end section and further into a second opposite end of the electric machine. Both branches flow from opposite ends of the electric machine into axial air passages in the rotor and further though radial air passages in the rotor to the air gap between the rotor and the stator and further through radial air passages in the stator to the middle section of the housing. A new cooling cycle begins when the hot air again enters from the stator to the middle section of the heat exchanger. Such an arrangement provides a fairly symmetric cooling of the electric machine.

The problem in such a symmetric cooling is, however, that the temperature of the cooling pipes in the second end section at the downstream end of the heat exchanger is higher than the temperature of the pipes in the first end section at the upstream end of the heat exchanger. The external cooling air enters the upstream end of the heat exchanger in a certain ambient temperature. The cooling air is then warmed in the first end section by the first branch of the internal air passing downwards across the pipes. The cooling air is further warmed in the middle section by the internal hot air passing upwards from the electric machine across the pipes in the middle section. The external cooling air is then finally further warmed in the second branch by the second branch of the internal air passing downwards across the pipes in the second end section. The temperature of the cooling pipes will thus rise in the second end section almost to the temperature of the second branch of the internal air. This means that the cooling capacity of the heat exchanger in the second end section is much lower compared to the cooling capacity in the first end section. The result of this is that a first end of the electric machine, which first end is situated under the upstream end of the heat exchanger will remain at a higher temperature compared to a second opposite end of the electric machine, which second end is situated under the downstream end of the heat exchanger.

### BRIEF DESCRIPTION OF THE INVENTION

An object of the present invention is to achieve an improved air-to-air heat exchanger providing a more uniform cooling of the apparatus to be cooled e.g. an electric machine.

The air-to-air heat exchanger according to the invention is characterized by what is stated in the characterizing portion of claim 1.

The air-to-air heat exchanger comprises:
a first housing comprising a floor, a ceiling, an upstream end wall, a downstream end wall, and side walls,
air channels extending in a first direction from the upstream end wall towards the downstream end wall in the first housing,
a top plenum extending from the upstream end wall to the downstream end wall in an upper portion of the first housing above the air channels,
partition walls extending in a second direction perpendicular to the first direction and dividing a lower portion of the first housing below the top plenum into an upstream end section, a middle section, and a downstream end section.

The air-to air heat exchanger is **characterized in that**:
the air channels terminate at the partition wall between the middle section and the downstream end section,
the downstream end section comprises at least one cone extending in the first direction and having a first upstream end at the partition wall where the air channels terminate, and a second contracted downstream end.

The termination of the air channels at the partition wall between the middle section and the second end section will reduce the pressure loss of the external air circulation in the air channels. Shorter air channels will have a smaller pressure loss. The pressure loss of the external air circulation in the at least one cone is negligible compared to the pressure loss in the air channels. If the power of the motor driving the fan producing the external airflow is kept constant, then the air quantity in the external air circulation will increase in the inventive arrangement. If the air quantity in the external air circulation is kept constant, then the power of the motor driving the fan can be decreased in the inventive arrangement.

The temperature rise of the external air circulation through the cone in the second end section of the heat exchanger will thus decrease compared to the temperature rise of external air circulation in air channels passing through the second end section in a prior art solution. This means that the internal circulation will be cooled with a colder external air circulation.

The use of the at least one cone in the second end section in the heat exchanger will reduce the pressure drop in the internal air circulation. A greater portion of the internal air will thus circulate through the second end section and a smaller portion through the first end section in the heat exchanger. There is enough free space for the second branch of the internal air circulation to pass along the outer surfaces of the at least one cone in the second end section in the heat exchanger.

The result of these effects is an evener cooling of the apparatus to be cooled. The cooling of the first end of the apparatus to be cooled i.e. the end of the apparatus that is below the upstream end of the heat exchanger will increase compared to prior art solutions where the air channels pass through the whole axial length of the heat exchanger. The cooling of the second opposite end of the apparatus to be cooled i.e. the end of the apparatus that is below the downstream end of the heat exchanger will decrease compared to prior art solutions where the air channels pass through the whole axial length of the heat exchanger.

The termination of the air channels into the partition wall between the middle portion and the downstream end portion within the heat exchanger will naturally reduce the amount of air channels needed in the heat exchanger. This will to some extent reduce the price of the heat exchanger. The cone is cheaper than the air channels.

The electric machine to be cooled by the heat exchanger is advantageously a generator in a wind turbine. The space within the nacelle in a wind turbine is limited. This means that the heat exchanger must be compact in order to fit into the nacelle with the electric generator. Also the housing of the heat exchanger and the housing of the electric generator must be compact.

### BRIEF DESCRIPTION OF THE DRAWINGS

In the following the invention will be described in greater detail by means of some embodiments with reference to the attached drawings, in which:
Figure 1 is a vertical cross section of an air-to-air heat exchanger according to the invention.
Figure 2 is a horizontal cross section of a second embodiment of an air-to-air heat exchanger according to the invention.
Figure 3 is a vertical cross section of an air-to-air heat exchanger according to the invention used for cooling an electric machine.
Figure 4 is an axonometric view showing the housing of the heat exchanger and the housing of the electric machine.

### DETAILED DESCRIPTION OF THE INVENTION

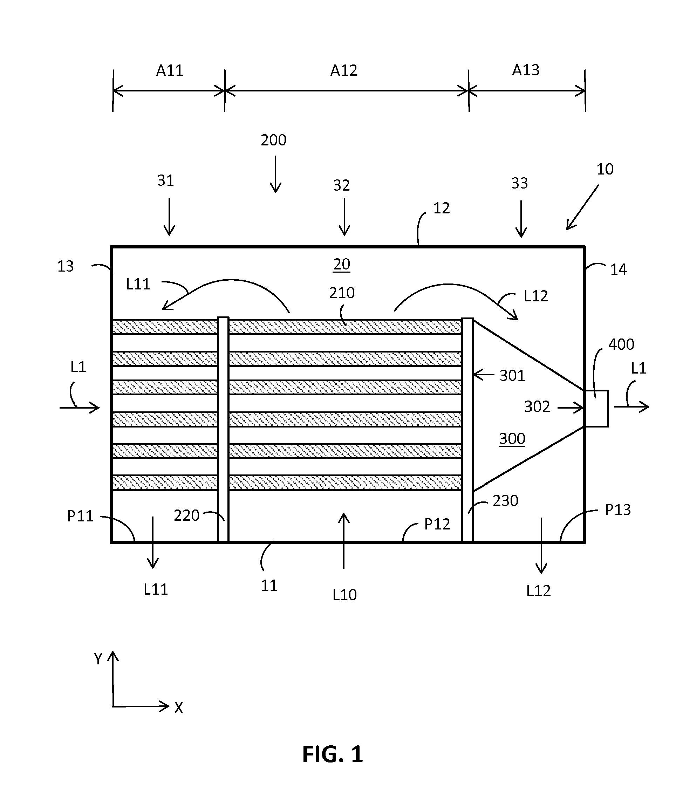

Figure 1 is a vertical cross section of an air-to-air heat exchanger according to the invention.

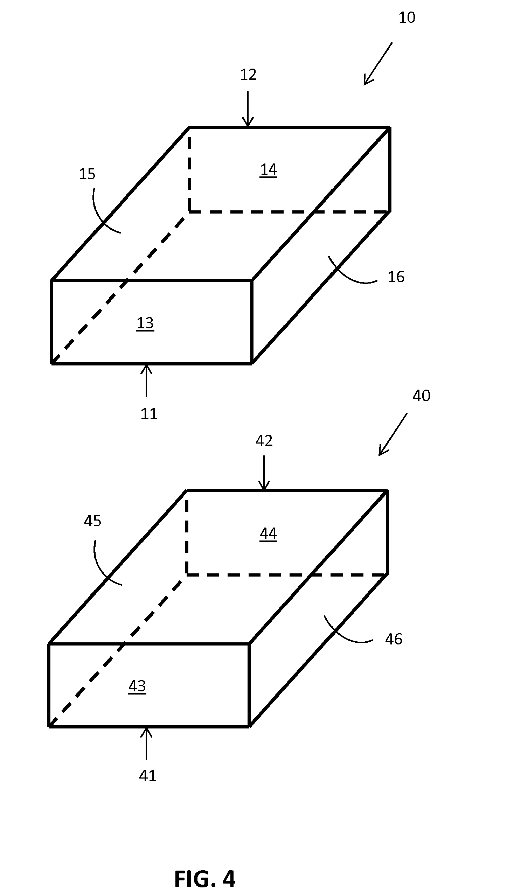

The heat exchanger 200 comprises a first housing 10 having a rectangular form and being provided with a floor 11 a ceiling 12, an upstream end wall 13, a downstream end wall 14 and side walls 15, 16 (figure 4). The first housing 10 forms thus a closed space. The first housing 10 has a first direction X and a second direction Y perpendicular to the first direction X. The first direction X is normally horizontal as the first housing 10 is situated on a floor or on an apparatus to be cooled on the operating site. The second direction Y is then vertical. The floor 11 comprises several air passages P11, P12, P13 allowing air to pass into the first housing 10 and out from the first housing 10. The air passages P11, P12, P13 are positioned in an upstream end portion, in a middle portion and in a downstream end portion of the floor 11.

The heat exchanger 200 comprises further air channels 210 extending in the first direction X from the upstream end wall 13 towards the downstream end wall 14 in the first housing 10. There is further a plenum 20 extending from the upstream end wall 13 to the downstream end wall 14 within the upper portion of the first housing 10 above the air channels 210. The top plenum 20 forms a united space above the uppermost air channels 210. There are further partition walls 220, 230 extending in the second direction Y from the floor 11 upwards. The partition walls 220, 230 terminate at a distance from the ceiling 12 of the first housing 10 at the lower edge of the plenum 20. The partition walls 220, 230 divide a lower portion of the first housing 10 into three consecutive sections 31, 32, 33. An upstream end section 31 is formed at the upstream end of the heat exchanger 200 between the upstream end wall 13 of the first housing 10 and a first partition wall 220. A middle section 32 is formed in the middle of the heat exchanger 200 between the first partition wall 220 and a second partition wall 230. A downstream end section 33 is formed at a downstream end of the heat exchanger 200 between the second partition wall 230 and the downstream end wall 14 of the first housing 10. The air channels 210 pass through the partition walls 220, 230. The edges of the partition walls 220, 230 are tightened against the outer surfaces of the air channels 210 so that leakages between the three sections 31, 32, 33 are eliminated.

The heat exchanger 200 comprises further a cone 300 extending in the first direction X direction within the downstream end section 33 of the heat exchanger 200. A first upstream end 301 of the cone 300 is situated at the second partition wall 230 between the middle section 32 and the downstream end section 33. A second downstream end 302 of the cone 300 is situated at the downstream end wall 14 of the first housing 10. The cross section area of the first upstream end 301 of the cone 300 is bigger than the cross section area of the second downstream end 302 of the cone 300. The cone 300 contracts from the first upstream end 301 towards the second downstream end 302. The air channels 210 are terminated at the partition wall 230 between the middle section 32 and the downstream end section 33. The air channels 210 open into the first upstream end 301 of the cone 300. The cone 300 replaces the air channels 210 within the downstream end section 33 of the heat exchanger 200.

An external air circulation L1 is directed through the air channels 210 from the upstream end wall 13 of the first housing 10 towards the downstream end wall 14 of the first housing 10. The external air circulation L1 flows from the downstream end of the air channels 210 into the upstream end 301 of the cone 300 and further through the cone 300 to the downstream end 302 of the cone 300 and further to an outlet opening 400. The external air circulation L1 can be provided by a fan circulating outdoor cooling air through the air channels 210 and the cone 300. The external air circulation L1 can be taken from the space where the first housing 10 is situated or from an exterior space or from the outdoor air. The exterior air circulation L1 can after it has passed through the heat exchanger 200 be directed into the space where the first housing 10 is situated or with air channels to an exterior space or to the outdoor air.

An internal air circulation L10 can be directed from an apparatus to be cooled situated under the first housing 10 upwards in the second direction Y through the air passages P12 in the middle portion of the floor 11 of the first housing 10. The internal air circulation L10 passes further across the middle section 32 in the heat exchanger 200 to the top plenum 20 of the heat exchanger 200. The internal air circulation L10 passes across the outer surface of the air channels 210 in the middle section 32 of the heat exchanger 200 when passing to the top plenum 20. The warm internal air circulation L10 will thus be cooled when it passes across the outer surface of the air channels 210 through which the external cooling air circulation L1 passes. The internal air circulation L10 is in the top plenum 20 divided into a first branch L11 directed towards the upstream end section 31 of the heat exchanger 200 and into a second branch L12 directed towards the downstream end section 33 in the heat exchanger 200. The first branch L11 of the internal air circulation L10 will pass downwards across the air channels 210 in the upstream end section 31 of the heat exchanger 200 and further through the air passages P11 in the upstream portion of the floor 11 to the apparatus to be cooled. The second branch L12 of the internal air circulation L10 will pass downwards across the cone 300 in the downstream end section 33 of the heat exchanger 200 and further through the air passages P13 in the downstream portion of the floor 11 to the apparatus to be cooled. The first L11 and the second L12 branch of the internal air circulation L10 will then pass across the apparatus to be cooled and start a new circulation cycle.

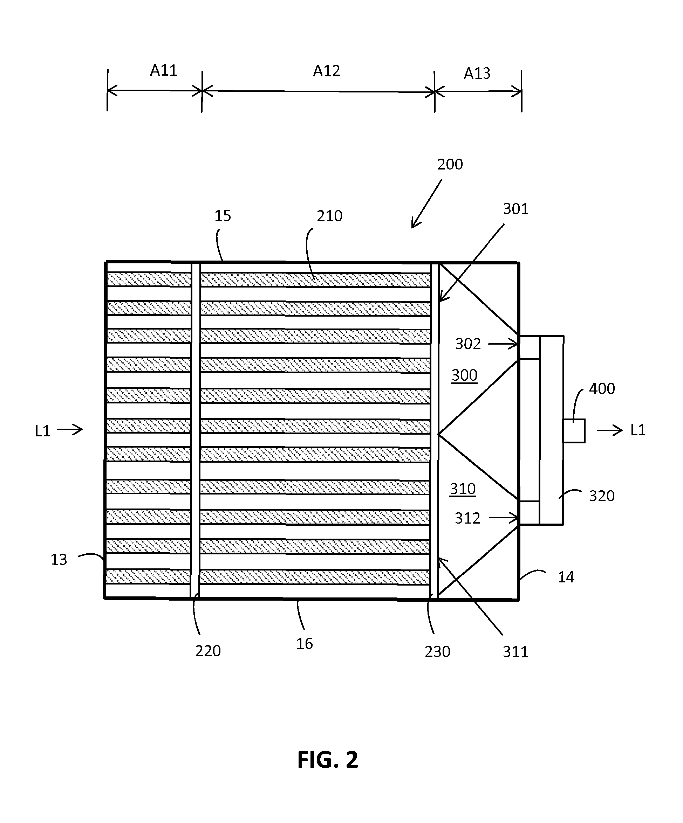

Figure 2 is a horizontal cross section of a second embodiment of an air-to-air heat exchanger according to the invention. This second embodiment of the heat exchanger 200 comprises two cones 300, 310 instead of one cone 300. A first portion of the air channels 210 are terminated into the first cone 300 and the rest of the air channels 210 are terminated into the second cone 310. The output 302 of the first cone 300 and the output 312 of the second cone 310 are then connected with a connection part 320 into one outlet opening 400. The use of two cones 300, 310 might be advantageous as an additional air passage is formed between the cones 300, 310 for the second branch L12 of the internal air L10 passing downwards across the cones 300, 310. The use of two cones 300, 310 requires on the other hand a separate connection part 320 in order to connect the outputs 302, 312 of the cones 300, 310. This will prolong the construction, which might be a disadvantage. There could naturally be even more than two parallel cones 300, 310 in the downstream end section 33 of the heat exchanger 200 if needed.

The length A11 of the upstream end section 31 in the first direction X is advantageously the same as the length A13 of the downstream end section 33 of the heat exchanger 200 in the first direction X. The length A12 of the middle section A14 of the heat exchanger 200 in the first direction X equals advantageously to the sum of the length A11 of the upstream end section 31 and the length A13 of the downstream end section 33 of the heat exchanger 200 in the first direction X. The cross section area of the downstream end 302, 312 of the cone 300, 310 is advantageously the same as the sum of the cross section areas of the air channels 210 terminating into the upstream end 301, 311 of said cone 300, 310.

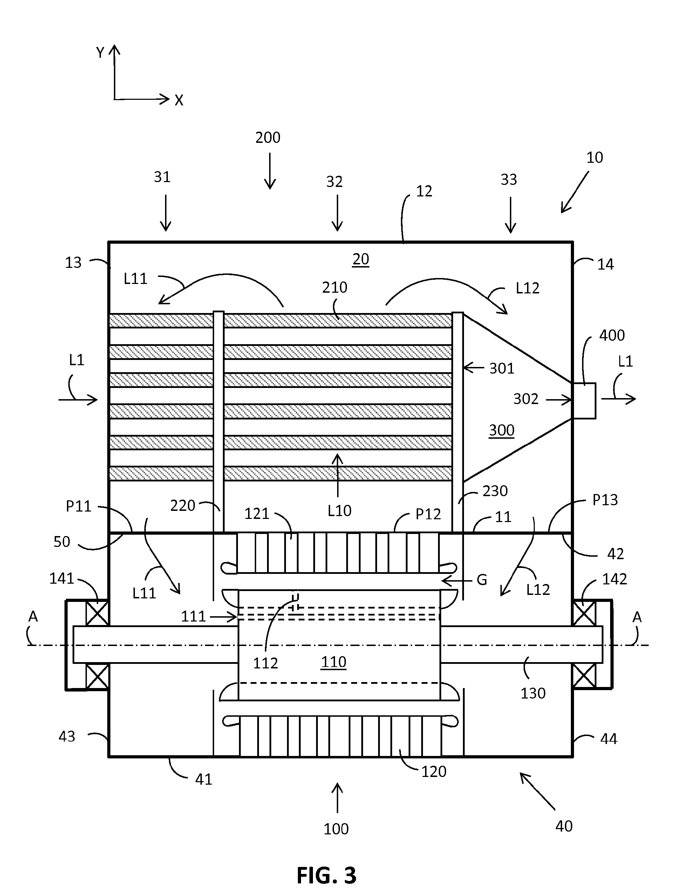

Figure 3 is a vertical cross section of an air-to-air heat exchanger according to the invention used for cooling an electric machine.

An electric machine 100 is provided within a second housing 40 having a rectangular form and being provided with a floor 41 a ceiling 42, a first end shield 43, a second end shield 44 and side walls 45, 46 (figure 4). The second housing 40 forms thus a closed space. The second housing 40 has a first direction X and a second direction Y perpendicular to the first direction X. The first direction X is normally horizontal as the second housing 40 is situated on a floor on the operating site. The first direction X and the second direction Y of the second housing 40 coincide with the corresponding first direction X and second direction Y of the first housing 10. The second housing 40 is positioned under the first housing 10 so that the floor 11 of the first housing 10 rests of the ceiling 42 of the second housing 40. The floor 11 of the first housing 10 and the ceiling 42 of the second housing 40 can form a single separation wall 50 between the first housing 10 and the second housing 40. The separation wall 50 is provided with air passages P11, P12, P13 allowing air to pass between the first housing 10 and the second housing 40.

The electric machine 100 comprises a rotor 110 fitted on a rotatable shaft 130. The shaft 130 is supported at both ends on bearings 141, 142. The shaft 130 has a centre axis A-A extending in the first direction X. The electric machine 100 comprises further a stator 120 surrounding the rotor 110. The electric machine 100 can be a generator or a motor. The rotor 110 is provided with axial A-A air channels 111 and radial air channels 112. The axial air channels 111 open into the radial air channels 112. The stator 120 is provided with radial air channels 121. Air can thus be directed from a first end and from a second end of the rotor 110 into the axial air channels 111 and further from the axial air channels 111 to the radial air channels 112. The air will then pass from the radial air channels 112 of the rotor 110 through the gap G between the rotor 110 and the stator 120 to the radial air channels 121 in the stator 120.

The hot air form the electric machine 100 will further pass from the radial air channels 121 in the stator 120 through the air passages P12 in the middle portion of the separation wall 50 into the middle section 32 in the heat exchanger 200. The internal air circulation L10 will then circulate between the electric machine 100 and the heat exchanger 200 as described in connection with figure 1. The first branch L11 of the internal air circulation L10 passes downwards from the heat exchanger 200 through the upstream end air passages P11 in the separation wall 50 to a first end of the electric machine 100.

The second branch L12 of the internal air circulation L10 passes downwards from the heat exchanger 200 through the downstream end air passages P13 to a second end of the electric machine 100. The first L11 and the second L12 branch of the internal air circulation L10 will then pass through the electric machine 100 from the rotor 110 to the stator 120 and further to the heat exchanger 200 in order to start a new circulation cycle.

The second downstream end 302, 312 of the cone 300, 310 terminates in both embodiments at the downstream end 14 wall of the second compartment 12. This is an advantageous construction but the downstream end 302, 312 of the cone 300, 310 could also terminate already within the downstream section 33 of the heat exchanger 200. A short air channel would then be needed between the downstream end 302, 312 of the cone 300, 310 and the downstream end wall 14 of the first housing 10.

A vertical cross section of the air channels 210 is advantageously circular i.e. the air channels 210 are pipes. The cross section of the air channels 210 could, however, also be of some other format e.g. rectangular. The air channels 210 can be positioned in horizontal and vertical rows forming a regular pattern, but also any other pattern is possible. The pattern could be e.g. such that each other horizontal row of air channels 210 is displaced so that the air channels 210 are positioned vertically between the air channels 210 in the adjacent horizontal rows.

The vertical cross section of the first upstream end 301, 311 of the cone 300, 310 is advantageously rectangular. The air channels 210 are terminated into corresponding holes in the second partition wall 230. The circumference of the first upstream end 301, 311 of the cone 300, 310 surrounds the holes in the second partition wall 230 so that all the air channels 210 open into the first end 301, 311 of the cone 300, 310. The vertical cross section of the second end 302, 312 of the cone 300, 310 is advantageously circular. A circular second end 302, 312 is advantageous when the air channels leading out from the space where the electric machine is have a circular cross section.

The first housing 10 and the second housing 40 are advantageously formed as rectangular boxes. It is practical to use rectangular boxes and an electric machine can easily be enclosed in a rectangular housing. The first housing 10 and/or the second housing 40 could, however, be of any form.

The internal circulation L10 can be achieved without the use of fans. The rotating rotor 110 of the electric machine 100 will be able to produce enough pressure to maintain the internal air circulation L10. It is, however, naturally possible to intensify the internal air circulation L10 by using one or several fans.

The cone 300, 310 is advantageously empty i.e. there are no partition walls within the cone 300, 310. There could, however, be partition walls within the cone 300, 310 if this would be considered beneficial. The partition walls would then guide the air within the cone 300, 310 from the upstream end 301, 311 towards the downstream end 302, 312 of the cone 300, 310.

The electric machine 100 is advantageously a generator in a wind turbine.

The invention and its embodiments are not limited to the examples described above but may vary within the scope of the claims.

## Claims

1. An air-to air heat exchanger (200) comprising:
a first housing (10) comprising a floor (11), a ceiling (12), an upstream end wall (13), a downstream end wall (14), and side walls (15, 16),
air channels (210) extending in a first direction (X) from the upstream end wall (13) towards the downstream end wall (14) in the first housing (10),
a top plenum (20) extending from the upstream end wall (13) to the downstream end wall (14) in an upper portion of the first housing (10) above the air channels (210),
partition walls (220, 230) extending in a second direction (Y) perpendicular to the first direction (X) and dividing a lower portion of the first housing (10) below the top plenum (20) into an upstream end section (31), a middle section (32), and a downstream end section (33),
**characterized in that**:
the air channels (210) terminate at the partition wall (230) between the middle section (32) and the downstream end section (33),
the downstream end section (33) comprises at least one cone (300, 310) extending in the first direction (X) and having a first upstream end (301, 311) at the partition wall (230) where the air channels (210) terminate, and a second contracted downstream end (302, 312).

2. An air-to-air heat exchanger according to claim 1, **characterized in that**:
an external air circulation (L1) is directed first through the air channels (210) and then through the at least one cone (300, 310) from the upstream end wall (13) towards the downstream end wall (14) of the first housing (10), and finally out from the housing (10),
an internal air circulation (L10) is directed from an apparatus to be cooled positioned outside the first housing (10) in the second direction (Y) through air passages (P12) in a middle portion of the floor (11) and further across the middle section (32) to the top plenum (20) where the internal air circulation (L10) is divided into a first branch (L11) passing across the upstream end section (31) through air passages (P11) in an upstream portion of the floor (11) back to a first end of the apparatus to be cooled and a second branch (L12) passing across the downstream end section (33) through air passages (P13) in a downstream portion of the floor (11) back to an opposite second end of the apparatus to be cooled.

3. An air-to-air heat exchanger according to claim 1 or 2, **characterized in that** the air channels (210) are formed of pipes having a circular cross section.

4. An air-to-air heat exchanger according to any one of claims 1 to 3, **characterized in that** the downstream end section (33) comprises one cone (300), whereby all the air channels (210) terminate into the first end (301) of the cone (300).

5. An air-to-air heat exchanger according to any one of claims 1 to 4, **characterized in that** the second downstream end (302, 312) of the at least one cone (300, 310) is situated at the outer end wall (14) of the first housing (10).

6. An air-to-air heat exchanger according to any one of claims 1 to 5, **characterized in that** the heat exchanger (200) is used to cool an electric machine (100) comprising a rotor (110) on a rotatable shaft (130) having a centre axis (A-A) extending in the first direction (X) and a stator (120) surrounding the rotor (110), the electric machine (100) being positioned within a second housing (40) comprising a floor (41), a ceiling (42), a first end shield (43), a second end shield (44), and side walls (45, 46).

7. An air-to-air heat exchanger according to claim 6, **characterized in that** the floor (11) of the first housing (10) is positioned on the ceiling (42) of the second housing (40), whereby the floor (11) of the first housing (10) and the ceiling (42) of the second housing (40) form a single separation wall (50) between the first housing (10) and the second housing (40).

8. An air-to-air heat exchanger according to claim 7, **characterized in that**:
an external air circulation (L1) is directed first through the air channels (210) and then through the at least one cone (300, 310) from the upstream end wall (13) towards the downstream end wall (14) of the first housing (10), and finally out from the housing (10),
an internal air circulation (L10) is directed from the electric machine (100) in the second direction (Y) through air passages (P12) in a middle portion of the separation wall (50) and further across the middle section (32) to the top plenum (20) where the internal air circulation (L10) is divided into a first branch (L11) passing across the upstream end section (31) through air passages (P11) in an upstream portion of the separation wall (50) back to a first end of the electric machine (100) and a second branch (L12) passing across the downstream end section (33) through air passages (P13) in a downstream portion of the separation wall (50) back to an opposite second end of the electric machine (100).

## Amended claims

### Amended claims in accordance with Rule 137(2) EPC.

**1.** An air-to air heat exchanger (200) comprising:
a first housing (10) comprising a floor (11), a ceiling (12), an upstream end wall (13), a downstream end wall (14), and side walls (15, 16),
air channels (210) extending in a first direction (X) from the upstream end wall (13) towards the downstream end wall (14) in the first housing (10),
a top plenum (20) extending from the upstream end wall (13) to the downstream end wall (14) in an upper portion of the first housing (10) above the air channels (210),
partition walls (220, 230) extending in a second direction (Y) perpendicular to the first direction (X) and dividing a lower portion of the first housing (10) below the top plenum (20) into an upstream end section (31), a middle section (32), and a downstream end section (33),
**characterized in that**:
the air channels (210) terminate at the partition wall (230) between the middle section (32) and the downstream end section (33),
the downstream end section (33) comprises at least one cone (300, 310) extending in the first direction (X) and having a first upstream end (301, 311) at the partition wall (230) where the air channels (210) terminate, and a second contracted downstream end (302, 312) at the downstream end wall (14) of the first housing (10) or within the downstream end section (33) in which case a further air channel is needed between the second contracted downstream end (302, 312) of the at least one cone (300, 310) and the downstream end wall (14) of the first housing (10),
the first upstream end (301, 311) of the at least one cone (300, 310) surrounds in a fluid tight manner in a circumferential direction all the air channels (210), which terminate at the partition wall (230) between the middle section (32) and the downstream end section (33).

**2.** An air-to-air heat exchanger according to claim 1, **characterized in that** the air channels (210) are formed of pipes having a circular cross section.

**3.** An air-to-air heat exchanger according to claim 1 or 2, **characterized in that** the downstream end section (33) comprises one cone (300), whereby all the air channels (210) terminate into the first end (301) of the cone (300).

**4.** An air-to-air heat exchanger according to any one of claims 1 to 3, **characterized in that** the second downstream end (302, 312) of the at least one cone (300, 310) is situated at the downstream end wall (14) of the first housing (10).

**5.** An arrangement to cool an apparatus with an air-to-air heat exchanger according to any one of claims 1 to 4, **characterized in that**:
an external air circulation (L1) is directed first through the air channels (210) and then through the at least one cone (300, 310) from the upstream end wall (13) towards the downstream end wall (14) of the first housing (10), and finally out from the housing (10),
an internal air circulation (L10) is directed from the apparatus to be cooled positioned outside the first housing (10) in the second direction (Y) through air passages (P12) in a middle portion of the floor (11) and further across the middle section (32) to the top plenum (20) where the internal air circulation (L10) is divided into a first branch (L11) passing across the upstream end section (31) through air passages (P11) in an upstream portion of the floor (11) back to a first end of the apparatus to be cooled and a second branch (L12) passing across the downstream end section (33) through air passages (P13) in a downstream portion of the floor (11) back to an opposite second end of the apparatus to be cooled.

**6.** An arrangement according to claim 5, **characterized in that** the apparatus to be cooled by the air-to-air heat exchanger (200) is an electric machine (100) comprising a rotor (110) on a rotatable shaft (130) having a centre axis (A-A) extending in the first direction (X) and a stator (120) surrounding the rotor (110), the electric machine (100) being positioned within a second housing (40) comprising a floor (41), a ceiling (42), a first end shield (43), a second end shield (44), and side walls (45, 46).

**7.** An arrangement according to claim 6, **characterized in that** the floor (11) of the first housing (10) is positioned on the ceiling (42) of the second housing (40), whereby the floor (11) of the first housing (10) and the ceiling (42) of the second housing (40) form a single separation wall (50) between the first housing (10) and the second housing (40).

**8.** An arrangement according to claim 7, **characterized in that**:
an external air circulation (L1) is directed first through the air channels (210) and then through the at least one cone (300, 310) from the upstream end wall (13) towards the downstream end wall (14) of the first housing (10), and finally out from the housing (10),
an internal air circulation (L10) is directed from the electric machine (100) in the second direction (Y) through air passages (P12) in a middle portion of the separation wall (50) and further across the middle section (32) to the top plenum (20) where the internal air circulation (L10) is divided into a first branch (L11) passing across the upstream end section (31) through air passages (P11) in an upstream portion of the separation wall (50) back to a first end of the electric machine (100) and a second branch (L12) passing across the downstream end section (33) through air passages (P13) in a downstream portion of the separation wall (50) back to an opposite second end of the electric machine (100).
